# EUROPÄISCHE PATENTANMELDUNG

(11) **EP 2 921 799 A1**
(43) Veröffentlichungstag der Anmeldung: **23.09.2015**
(21) Anmeldenummer: 15152825.4
(22) Anmeldetag: 28.01.2015
(51) Int. Cl.: F24J 2/52, F24J 2/46

(54) **Befestigungssystem zum Befestigen von Dachaufbauten**

(30) Priorität: 18.03.2014 DE 202014101224 U; 01.04.2014 DE 102014206132
(71) Anmelder: ROBERT BOSCH GMBH, 70442 Stuttgart (DE)
(72) Erfinder: Otting, Herbert, 49832 Beesten (DE)

(57) **Zusammenfassung**

Die Erfindung betrifft ein Befestigungssystem zum Befestigen von Dachaufbauten sowie ein Verfahren zum Befestigen eines Dachaufbaus mit einem derartigen Befestigungssystem. Das Befestigungssystem (1) weist mindestens eine Befestigungsschraube (2) auf, die an einem Ende (3) ein erstes Gewinde (4) zum Verbinden mit einem Dachunterbau (12, 17) und am anderen Ende (5) einen Befestigungsabschnitt (6), der insbesondere ein zweites Gewinde umfasst, zum Anschließen eines Dachaufbaus aufweist.

Zur Aufnahme dachparalleler Kräfte ist an der Befestigungsschraube (2) ein Zugelement (10) befestigt, das beabstandet zur Befestigungsschraube (2) mit dem Dachunterbau (12, 17) verbindbar ist.

## Beschreibung

Die Erfindung betrifft ein Befestigungssystem zum Befestigen von Dachaufbauten auf einem Dachunterbau mit den Merkmalen des Obergriffs des Anspruchs 1. Ferner betrifft die Erfindung ein Verfahren zum Befestigen eines Dachaufbaus mit einem derartigen Befestigungssystem.

### Stand der Technik

Derartige Befestigungssysteme dienen beispielsweise zum Befestigen von Solarkollektoren auf Hausdächern. Die Befestigungsschraube, die auch als Stockschraube bezeichnet werden kann, ist üblicherweise eine lange Gewindestange mit zwei unterschiedlichen Gewinden. Dabei dient das erste Gewinde dazu, die Befestigungsschraube mit dem Dachunterbau zu verbinden, also beispielsweise in eine aus Holz bestehende Dachlatte einzuschrauben, während das zweite Gewinde, das am gegenüberliegenden Ende der Befestigungsschraube ausgebildet ist, zur Befestigung des Dachaufbaus genutzt wird. Dementsprechend weist dieses in der Regel ein metrisches Gewinde auf, ist also in Form einer üblichen Maschinenschraube ausgebildet.

Unter Dachunterbau wird hier ein Dachtragwerk, ein Dachgerüst bzw. ein Traggerüst eines Gebäudedaches bzw. Teile davon verstanden, er umfasst Dachbalken, Dachsparren und Dachlatten. Unter Dachaufbau werden außen auf ein Dach eines Gebäudes montierte Gegenstände wie thermische oder photovoltaische Solarkollektoren verstanden. Unter Dacheindeckung wird hier eine Eindeckung beispielsweise aus Dachpfannen verstanden, die den Dachunterbau und das darunter liegende Gebäude vor Witterungseinflüssen, insbesondere dem Eindringen von Wasser, schützt. Die Dacheindeckung liegt üblicherweise am Dachunterbau auf und wird daran befestigt

Üblicherweise werden die Befestigungsschrauben durch Durchgangsöffnungen in einer Dacheindeckung hindurch geführt, die oberhalb des Dachunterbaus angeordnet ist und damit zwischen dem Dachunterbau und den daran zu befestigenden Dachaufbauten liegt. Der Dachaufbau, wie z.B. ein Solarkollektor, wird also mit Hilfe des Befestigungssystems oberhalb der Dacheindeckung angeordnet und dabei am Dachunterbau befestigt. Dafür sind je nach Aufbau des Daches relativ lange Befestigungsschrauben erforderlich.

Aufgrund der relativ schlanken Bauart der Befestigungsschraube kann sie nur begrenzt dachparallele Kräfte bzw. Biegekräfte aufnehmen. Dies führt dazu, dass insbesondere bei relativ langen Befestigungsschrauben diese einen recht großen Durchmesser aufweisen müssen. Dies treibt insbesondere die Kosten in die Höhe.

Der Erfindung liegt nun die Aufgabe zugrunde, die Nachteile des Standes der Technik zu beseitigen und insbesondere ein Befestigungssystem anzugeben, dass den Einsatz relativ langer Befestigungsschrauben ermöglicht und dennoch eine ausreichende Stabilität gegenüber dachparallelen Kräften aufweist.

Erfindungsgemäß wird diese Aufgabe durch ein Befestigungssystem mit den Merkmalen des Anspruchs 1 sowie durch ein Verfahren mit den Merkmalen des Anspruchs 9 gelöst. Vorteilhafte Ausgestaltungen finden sich in den Unteransprüchen.

Bei einem Befestigungssystem zum Befestigen von Dachaufbauten, das mindestens eine Befestigungsschraube aufweist, die an einem ersten Ende ein erstes Gewinde zum Verbinden mit einem Dachunterbau und am anderen Ende einen Befestigungsabschnitt zum Anschließen eines Dachaufbaus aufweist, ist erfindungsgemäß vorgesehen, dass am Befestigungsabschnitt der Befestigungsschraube mindestens ein Zugelement befestigt ist, das beabstandet zur Befestigungsschraube mit dem Dachunterbau verbindbar ist.

Über das Zugelement können dann auch dachparallele Kräfte aufgenommen werden. Das Zugelement verläuft dabei im eingebauten Zustand des Befestigungssystems in einem Winkel von beispielsweise zwischen 10° und 80° zur Befestigungsschraube, zum Beispiel von einem vom ersten Gewinde entfernten Bereich der Befestigungsschraube zu einem vom ersten Gewinde entfernten Bereich des Dachunterbaus. Damit erfolgt eine weitgehende Stabilisierung der Befestigungsschraube gegenüber dachparallelen Kräften. Gegebenenfalls können dabei zwei oder mehr Zugelemente an einer Befestigungsschraube angreifen. Die Befestigungsschraube kann dadurch auch bei relativ großen Längen schlank dimensioniert werden. Auch Standardschrauben bzw. Gewindestangen können aufgrund des Zugelements dann relativ große dachparallele Kräfte aufnehmen. Damit ist eine kostengünstige Fertigung möglich. Der Befestigungsabschnitt weist dabei vorzugsweise ein zweites Gewinde auf, da dem das Zugelement über eine Mutter befestigt ist. Es ist aber auch möglich, das Zugelement am Befestigungsabschnitt mittels einer Klemmvorrichtung oder einer anderen geeigneten Fixiervorrichtung zu befestigen

Bevorzugterweise ist das Zugelement im eingebauten Zustand des Befestigungssystems vollständig unterhalb einer Dacheindeckung angeordnet. Die Dacheindeckung benötigt dann keine zusätzliche Durchführung für das Zugelement. Ferner wird das Zugelement durch die Dacheindeckung vor Witterungseinflüssen weitgehend geschützt, muss also keine hohen Anforderungen beispielsweise hinsichtlich einer Korrosionsfestigkeit erfüllen. Dementsprechend kann das Zugelement aus einem relativ kostengünstigen und leicht verarbeitbaren Material hergestellt werden.

Alternativ kann das Zugelement im eingebauten Zustand des Befestigungssystems auch oberhalb der Dacheindeckung angeordnet sein. Dies ist insbesondere dann vorteilhaft, wenn unterhalb der Dacheindeckung nicht viel Raum zur Verfügung steht.

Vorzugsweise ist ein Ende des Zugelements zwischen einer auf den mit einem zweiten Gewinde versehenen Befestigungsabschnitt aufgeschraubten Mutter und einer Kontermutter gehalten. Mithilfe der auf das zweite Gewinde aufgeschraubten Mutter kann relativ einfach der Angriffspunkt des Zugelements an der Befestigungsschraube eingestellt werden. Dabei ist es in der Regel günstig, dass das Zugelement relativ dicht unterhalb der Dacheindeckung an die Befestigungsschraube angreift. Dies lässt sich durch entsprechendes Aufschrauben der Mutter einfach einstellen. Mithilfe der Kontermutter kann dann eine hohe Klemmkraft und damit eine hohe Festigkeit der Anbindung des Zugelements an die Befestigungsschraube erreicht werden. Dabei kann zusätzlich vorgesehen sein, dass die Befestigungsschraube durch eine am Ende des Zugelements ausgebildete Öffnung geführt wird, sodass neben der kraftschlüssigen Verbindung durch das Einspannen des Zugelements zwischen Mutter und Kontermutter eine formschlüssige Verbindung zwischen Zugelement und Befestigungsschraube erreicht wird. Dies vereinfacht zum einen die Montage auf der Baustelle und ergibt zum anderen eine sehr sichere Verbindung.

In einer alternativen Ausgestaltung ist das Zugelement direkt mit dem Befestigungsabschnitt der Befestigungsschaube verbindbar, insbesondere verschraubbar. Eine Mutter und/oder eine Kontermutter sind dann nicht unbedingt notwendig.

In einer bevorzugten Weiterbildung weist die Befestigungsschraube ein Verlängerungselement auf, das ein Außengewinde aufweist, wobei die Mutter als Verbindungsmutter ausgebildet ist und die Befestigungsschraube mit dem Verlängerungselement verbindet. Das Verlängerungselement stellt also eine Verlängerung der Befestigungsschraube dar, sodass auch hohe Einbauhöhen erreichbar sind. Über die Verbindungsmutter kann relativ einfach eine Verbindung zwischen dem Verlängerungselement und der eigentlichen Befestigungsschraube erreicht werden. Dafür entspricht üblicherweise das Außengewinde dem zweiten Gewinde der Befestigungsschraube. Durch Ausnutzen der Verbindungsmutter zum Befestigen der Befestigungsschraube ist an der Mutter eine Kontermutter erforderlich. Der Aufwand zum Befestigen des Verlängerungselements wird damit gering gehalten. Dabei werden gegebenenfalls eine oder mehrere Unterlegscheiben zwischen der Verbindungsmutter beziehungsweise der Mutter und der Kontermutter vorgesehen, um eine Belastung des Zugelements beim Anspannen der Kontermutter gering zu halten.

In einer bevorzugten Ausgestaltung ist das Zugelement als Blechstreifen insbesondere aus verzinktem Stahlblech ausgebildet. Dies stellt eine sehr einfache, kostengünstige Ausgestaltung des Zugelements dar. Alternativ sind andere Materialien wie beispielsweise ein Gewebeband oder Ähnliches möglich.

Alternativ kann das Zugelement beispielsweise auch aus einem Stahldraht hergestellt werden, da es im Wesentlichen nur Zugkräfte aufnehmen muss.

In einer bevorzugten Ausgestaltung ist das Verlängerungselement aus rostfreiem Stahl, insbesondere aus Edelstahl, und die Befestigungsschraube aus insbesondere verzinktem Stahl gebildet. Damit wird dem Umstand Rechnung getragen, dass alle Elemente, die unterhalb der Dacheindeckung angeordnet sind, vor Umwelteinflüssen weitgehend geschützt sind und daher keine hohe Korrosionsfestigkeit aufweisen müssen. Nur das Verlängerungselement, das durch die Durchführungsöffnung der Dacheindeckung geführt ist, muss dementsprechend aus einem korrosionsfesten Material bestehen. Die Materialkosten werden so gering gehalten.

In einer alternativen Ausgestaltung ist die Befestigungsschraube aus Edelstahl gebildet. Dies ist insbesondere dann vorteilhaft, wenn kein Verlängerungselement verwendet wird und die Befestigungsschraube teilweise den Umweltbedingungen ausgesetzt wird, da sie mit ihrem oberen Ende durch die Durchführungsöffnung der Dacheindeckung hindurchragt. Edelstahl bietet eine entsprechend hohe Korrosionsfestigkeit und - beständigkeit.

Vorzugsweise weist das Zugelement eine Spanneinrichtung auf. Dadurch ist es beispielsweise möglich, das Zugelement nahezu spannungsfrei zu montieren und erst anschließend leicht zu belasten. Auch können über einen längeren Zeitraum auftretende Längenänderungen durch eine derartige Spanneinrichtung ausgeglichen werden.

Bei einem Verfahren zum Befestigen eines Dachaufbaus mit einem Befestigungssystem nach einem der Ansprüche 1 bis 8 ist erfindungsgemäß vorgesehen, dass die Befestigungsschraube mit dem ersten Gewinde in den Dachunterbau eingeschraubt wird, wobei sich der Befestigungsabschnitt der Befestigungsschraube, der insbesondere ein zweites Gewinde umfasst, oder das Verlängerungselement durch eine Durchführungsöffnung, die in einer Dacheindeckung ausgebildet ist, erstreckt, wobei das Zugelement unterhalb der Dacheindeckung mit einem ersten Ende an der Befestigungsschraube befestigt und beabstandet zur Befestigungsschraube mit einem zweiten Ende am Dachunterbau befestigt wird.

Durch diese Ausgestaltung kann die Befestigungsschraube auch bei relativ großen Längen dachparallele Kräfte aufnehmen, da diese über das Zugelement abgeleitet werden. Die Befestigungsschraube kann so relativ dünn ausgebildet sein, wobei insbesondere Standardschrauben verwendet werden können. Durch die Anordnung des Zugelements unterhalb der Dacheindeckung kann das Zugelement aus relativ kostengünstigen Materialien hergestellt werden, die keine hohe Korrosionsfestigkeit aufweisen müssen. Ferner sind keine zusätzlichen Durchführungen in der Dacheindeckung erforderlich. Dichtigkeitsprobleme und zusätzliche Arbeitsschritte werden so vermieden. Dabei wird durch die beabstandete Befestigung des zweiten Endes des Zugelements im Verhältnis zur Befestigungsschraube eine entsprechende winkelige Ausrichtung des Zugelements erreicht, sodass dieses in der Lage ist, dachparallele Kräfte aufzunehmen.

In einer bevorzugten Weiterbildung wird die Befestigungsschraube in eine erste Dachlatte des Dachunterbaus eingeschraubt und das zweite Ende des Zugelements an einer dazu parallelen, zweiten Dachlatte insbesondere unter Zug befestigt. Zu den üblichen Verfahrensschritten, die zum Einbauen einer Befestigungsschraube beziehungsweise eines derartigen Befestigungssystems erforderlich sind, kommt also nur die Befestigung des Zugelements. Durch die Befestigung des Zugelements an einer zweiten Dachlatte werden die auf den Dachunterbau wirkenden Kräfte gut verteilt. Dabei kann das zweite Ende des Zugelements beispielsweise mittels Nägeln, aber auch mittels Schrauben oder anderen geeigneten Befestigungsmitteln, an der zweiten Dachlatte befestigt werden.

Die Erfindung wird im Folgenden anhand bevorzugter Ausführungsbeispiele in Verbindung mit den Zeichnungen näher beschrieben. Hierin zeigen:
Figur 1 eine erste Ausführungsform des Befestigungssystems und
Figur 2 eine zweite Ausführungsform des Befestigungssystems.

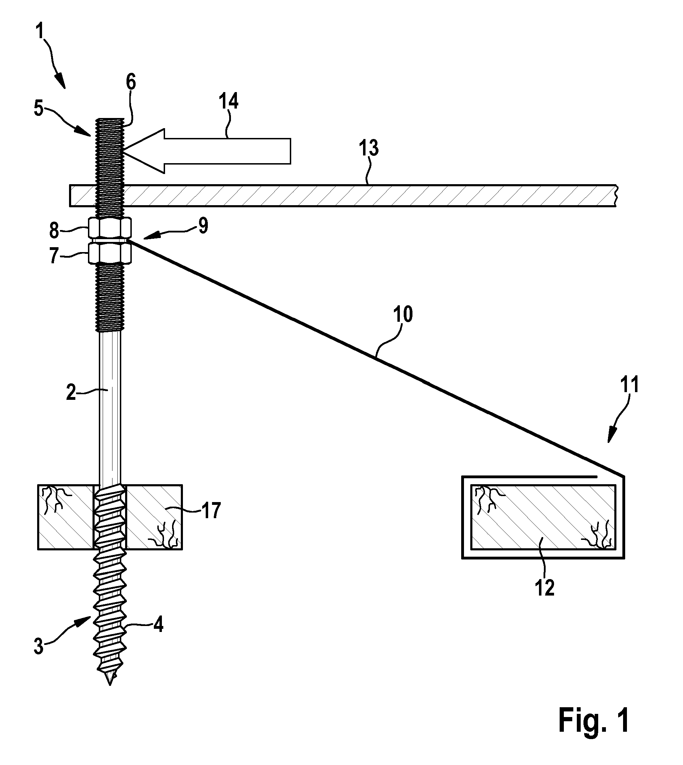

In Figur 1 ist ein Befestigungssystem 1 in schematischer Seitenansicht dargestellt. Das Befestigungssystem 1 umfasst eine Befestigungsschraube 2, die an einem unteren Ende 3 ein erstes Gewinde 4 aufweist, das als sogenanntes Holzgewinde ausgebildet ist, also zum Einschrauben in einen Holzwerkstoff dient. Am oberen Ende 5 der Befestigungsschraube 2 ist in einem Befestigungsabschnitt 6 ein zweites Gewinde ausgebildet, dass als metrisches Gewinde ausgebildet ist und zum Anschließen eines Dachaufbaus wie einem Solarkollektor genutzt werden kann. Auf das Gewinde des Befestigungsabschnitts 6 sind eine Mutter 7 und eine damit zusammenwirkende Kontermutter 8 geschraubt, wobei zwischen der Mutter 7 und der Kontermutter 8 insbesondere unter Zwischenlage mindestens einer Unterlegscheibe ein oberes Ende 9 eines Zugelements 10 befestigt ist.

Ein unteres Ende 11 des Zugelements 10 ist an einer schematisch dargestellten Dachlatte 12 befestigt, die Teil eines Dachunterbaus ist. Die Befestigungsschraube 2 ist mit ihrem unteren Ende 3 in eine zu dieser Dachlatte 12 parallelen weiteren Dachlatte 17 eingeschraubt. Dabei ist das Zugelement 10 leicht unter Zug stehend, sodass es winklig zur Befestigungsschraube verläuft und dachparallele Kräfte ableiten kann.

Das obere Ende 5 der Befestigungsschraube 2 erstreckt sich oberhalb der Mutter 7 und der Kontermutter 8 durch eine nicht dargestellte Durchführungsöffnung einer Dachabdeckung 13, bei der es sich beispielsweise um herkömmliche Dachpfannen handelt. Dementsprechend kann am oberen Ende 5 ein Dachaufbau befestigt werden, der sich dann oberhalb der Dachabdeckung befindet. Über das Zugelement 10 können auch Kräfte 14, die quer zur Längserstreckung der Befestigungsschraube, also im Wesentlichen dachparallel, wirken, aufgenommen werden, ohne dass die Befestigungsschraube zu stark auf Biegung belastet wird. Damit ist es möglich, auch relativ lange Befestigungsschrauben zu verwenden, ohne diese hinsichtlich ihres Durchmessers zu sehr vergrößern zu müssen.

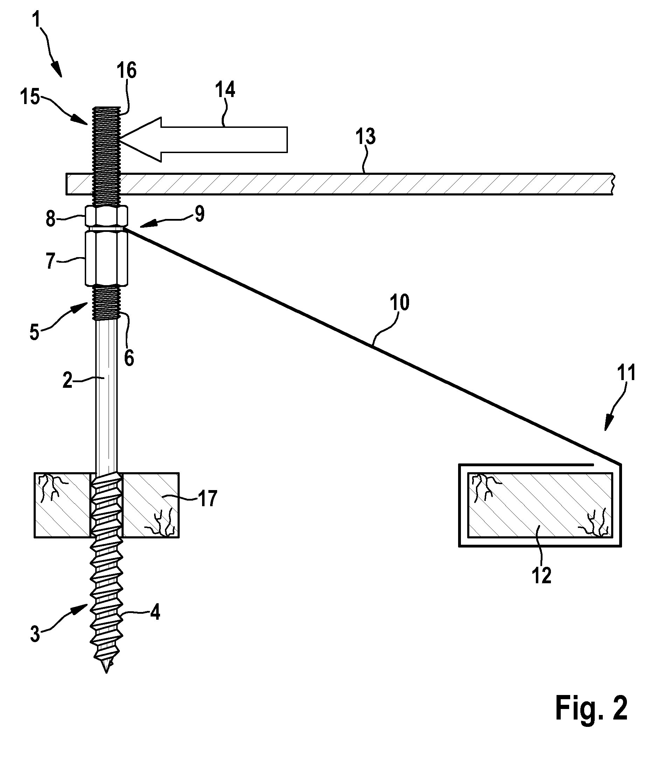

In Figur 2 ist ein leicht abgewandeltes Ausführungsbeispiel gegenüber Figur 1 gezeigt. Dabei sind gleiche Elemente mit den gleichen Bezugszeichen versehen.

Die Mutter 7 ist bei diesem Ausführungsbeispiel als Verbindungsmutter ausgebildet, weist also eine größere axiale Erstreckung auf, sodass über die Mutter 7 das obere Ende 5 der Befestigungsschraube 2 mit einem Verlängerungselement 15 axial verlängert werden kann. Das Verlängerungselement 15 weist dafür vorzugsweise ein durchgehendes Gewinde 16 auf, das von seiner Geometrie her dem zweiten Gewinde im Befestigungsabschnitt 6 der Befestigungsschraube 2 entspricht.

Das obere Ende 9 des Zugelements 10 ist dabei zwischen der als Verbindungsmutter ausgebildeten Mutter 7 und wiederum einer Kontermutter 8 gehalten, wobei die Kontermutter 8 dabei auf das Verlängerungselement 15 aufgeschraubt ist. Die Muttter 7 weist dabei eine so große axiale Erstreckung auf, dass das Verlängerungselement 15 und die Befestigungsschraube 2 stabil miteinander verbunden werden können.

Durch diese Ausgestaltung ist es möglich, zum einen längere axiale Längen zu erzielen, zum anderen aber auch, für die unterhalb der Dacheindeckung 13 angeordneten Elemente günstigere Materialien zu verwenden als für das Verlängerungselement 15, das durch die Durchführung der Dacheindeckung 13 geführt ist und damit zumindest teilweise den Witterungseinflüssen ausgesetzt ist. Dementsprechend ist es vorteilhaft, für das Verlängerungselement 15 beispielsweise Edelstahl zu verwenden, während die übrigen Elemente aus kostengünstigeren, verzinkten Stahl hergestellt werden.

Durch die erfindungsgemäße Ausgestaltung des Befestigungssystems können dachparallele Kräfte über das Zugelement aufgenommen werden. Damit ist es möglich, als Befestigungsschraube Standardelemente zu verwenden. Dabei wird ein unteres Ende des Zugelements beabstandet zur Befestigungsschraube mit dem Dachunterbau verbunden, beispielsweise wird die Zugstrebe an einer Dachlatte befestigt, während die Befestigungsschraube mit einer weiteren, dazu beabstandeten Dachlatte verschraubt wird. Ein großer Teil dachparallel wirkender Kräfte wird dann über das Zugelement in die Dachlatte eingeleitet und die Befestigungsschraube entsprechend entlastet. Damit können auch größere Lasten aufgenommen werden.

Durch die Anordnung des Zugelements unterhalb der Dacheindeckung kann dieses aus kostengünstigem Material hergestellt werden, da es vor Witterungseinflüssen geschützt ist. Ferner ist es nicht notwendig, für das Zugelement eine zusätzliche Öffnung in der Dacheindeckung vorzusehen. Vielmehr ist die üblicherweise für Befestigungsschrauben für Dachaufbauten erforderliche Durchführungsöffnung auch für das erfindungsgemäße Befestigungssystem ausreichend.

## Patentansprüche

1. Befestigungssystem zum Befestigen von Dachaufbauten, das mindestens eine Befestigungsschraube (2) aufweist, die an einem ersten Ende (3) ein erstes Gewinde (4) zum Verbinden mit einem Dachunterbau (12, 17) und am anderen Ende (5) einen Befestigungsabschnitt (6) zum Anschließen eines Dachaufbaus aufweist, **dadurch gekennzeichnet, dass** an der Befestigungsschraube (2) mindestens ein Zugelement (10) befestigt ist, das beabstandet zur Befestigungsschraube (2) mit dem Dachunterbau (12, 17) verbindbar ist.

2. Befestigungssystem nach Anspruch 1, **dadurch gekennzeichnet, dass** das Zugelement (10) im eingebauten Zustand des Befestigungssystems (1) vollständig unterhalb einer Dacheindeckung (13) angeordnet ist.

3. Befestigungssystem nach Anspruch 1 oder 2, **dadurch gekennzeichnet, dass** der Befestigungsabschnitt (6) ein zweites Gewinde aufweist, wobei ein Ende des Zugelements (10) zwischen einer auf das zweite Gewinde aufgeschraubten Mutter (7) und einer Kontermutter (8) gehalten ist.

4. Befestigungssystem nach einem der vorhergehenden Ansprüche, **dadurch gekennzeichnet, dass** die Befestigungsschraube (2) ein Verlängerungselement (15) aufweist, das ein Außengewinde (16) aufweist, wobei die Mutter (7) als Verbindungsmutter ausgebildet ist und die Befestigungsschraube (2) mit dem Verlängerungselement (15) verbindet.

5. Befestigungssystem nach einem der vorhergehenden Ansprüche, **dadurch gekennzeichnet, dass** das Zugelement (10) als Gewebeband oder als Blechstreifen insbesondere aus verzinktem Stahl ausgebildet ist.

6. Befestigungssystem nach einem der vorhergehenden Ansprüche, **dadurch gekennzeichnet, dass** das Verlängerungselement (15) aus rostfreiem Stahl und die Befestigungsschraube (2) aus insbesondere verzinktem Stahl gebildet ist.

7. Befestigungssystem nach einem der vorhergehenden Ansprüche, **dadurch gekennzeichnet, dass** das Zugelement (10) eine Spanneinrichtung aufweist.

8. Verfahren zum Befestigen eines Dachaufbaus mit einem Befestigungssystem nach einem der vorhergehenden Ansprüche, **dadurch gekennzeichnet, dass** die Befestigungsschraube (2) mit dem ersten Gewinde (4) in den Dachunterbau (12, 17) eingeschraubt wird, wobei sich das der Befestigungsabschnitt (6) der Befestigungsschraube (2) oder das Verlängerungselement (15) durch eine Durchführungsöffnung, die in einer Dacheindeckung (13) ausgebildet ist, erstreckt, wobei das Zugelement (10) unterhalb der Dacheindeckung (13) mit einem ersten Ende (9) an der Befestigungsschraube (2) befestigt und beabstandet zur Befestigungsschraube (2) mit einem zweiten Ende (11) am Dachunterbau (12, 17) befestigt wird.

9. Verfahren nach Anspruch 8, **dadurch gekennzeichnet, dass** die Befestigungsschraube (2) in eine erste Dachlatte (17) des Dachunterbaus eingeschraubt wird und das zweite Ende (11) des Zugelements (10) an einer dazu parallelen, zweiten Dachlatte (12) unter Zug befestigt wird.
